(19) Europäisches Patentamt
European Patent Office
Office européen des brevets

(11) **EP 2 826 808 B1**

(12) **EUROPEAN PATENT SPECIFICATION**

(45) Date of publication and mention
of the grant of the patent:
**26.09.2018 Bulletin 2018/39**

(51) Int Cl.:
***D01F 6/62*** (2006.01)    ***D01F 1/04*** (2006.01)
***C08J 3/22*** (2006.01)

(21) Application number: **13760463.3**

(22) Date of filing: **30.01.2013**

(86) International application number:
**PCT/ES2013/070043**

(87) International publication number:
**WO 2013/135926 (19.09.2013 Gazette 2013/38)**

(54) **POLYESTER FIBRES AND FILAMENTS PREPARED BY USE OF PMMA PIGMENT MASTERBATCH, PRODUCTION METHOD THEREOF AND USE**

POLYESTERFASERN UND FILAMENTE, HERGESTELLT DURCH VERWENDUNG VON PMMA PIGMENT MASTERBATCH, HERSTELLUNGSVERFAHREN UND VERWENDUNG

FIBRES ET FILAMENTS DE POLYESTER PRÉPARÉS PAR UTILISATION D'UN MASTERBATCH DE PIGMENT DE PMMA, PROCÉDÉ DE FABRICATION ET UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2012 ES 201230366**

(43) Date of publication of application:
**21.01.2015 Bulletin 2015/04**

(73) Proprietor: **Iqap Masterbatch Group, S.L.
08510 Masies de Roda (ES)**

(72) Inventors:
• **CASTANYER COLLELL, Josep
08510 Masies de Roda (Barcelona) (ES)**
• **ESPAÑA PLANS, Martín
E-08510 Masies de Roda (Barcelona) (ES)**

(74) Representative: **Ponti & Partners, S.L.P
C. de Consell de Cent 322
08007 Barcelona (ES)**

(56) References cited:
**EP-A1- 1 772 478       EP-A2- 0 242 754
WO-A1-2011/152449    JP-A- S 638 458
JP-A- H0 693 201       JP-A- H09 227 768
US-A- 4 585 818        US-A- 4 609 710
US-A- 5 484 837        US-A1- 2008 085 959**

• **DATABASE WPI 19 November 2012 Derwent Publications Ltd., London, GB; AN 1987-299965, XP003033838 & EP 0 242 754 A2 (BASF LACKE & FARBEN) 28 October 1987**

## Description

### Object of the Invention:

The invention pertains to the field of synthetic-fibre production, mainly for the textile industry and relates to the manufacturing of synthetic yarn and fibres from polyester polymers using the fusion spinning procedure.

Specifically the invention relates to the design and use of a concentrated polymeric composition ("masterbatch") to incorporate it into the molten fibre and filament-forming polyester polymers during the extrusion process, in order to increase speed in the spinning process (productivity).

Specifically, the polymer composition of this invention will apply preferably to pre-oriented yarn with the aim of spinning them at a greater speed but with a rheological behaviour (load-elongation curve) similar to when they are spun at less speed without incorporating "masterbatch".

### State of the Art:

A polymer support, known in this field as "carrier", is the medium in which a concentrate of colour pigments or other additives is dispersed, known as "masterbatch", which is dosed in the main polymer to modify the properties of the fibres and filaments, creating products with different technical characteristics and specific improvements for the applications they have been designed for.

There is a wide range of "masterbatches" on the market, the composition of which depends on what they are to be used for. However, to date the use of polymethylmethacrylate (PMMA) as a support or carrier of additives in a "masterbatch", with the aim of increasing productivity in the fusion spinning process is unknown.

In fusion spinning procedures, PMMA has been used as an additive to reduce the orientation, as is the case of Spanish patent no. ES2210929, referring to polyester fibres and filaments that contain PMMA added in amounts of 0.1 - 4% by weight with regard to the polymer forming the threads. PMMA is injected into the current of main molten mass of polyester; it is dispersed and homogenized in the molten polymer, resulting in an increased elongation at break (elongation) at high spinning speed.

It is used for the same purpose in USA patents no. US2004076823 and in Japanese patents no. JP11350277. Patent US2004076823 relates to a co-extruded composition of PTT polyester fibre (Polytrimethyleneterephthalate) adding a PMMA resin, among others, achieving a 30% increase in the elongation at break of the fibre, allowing the spinning speed to be increased. Patent JP11350277 refers to the effect of PMMA as a limiter of the crystalline orientation as it is used as an additive in a composition of polyester yarn or filaments, increasing the elongation at break of the fibre with the aim of preparation of voluminous yarn (HB) by mixing yarn with different shrinkage capacity (differential shrinkage).

The fact that industry needs to improve productivity without affecting the quality of the manufactured products is well known. In the case of manufacturing of fibres for the textile industry, this need is especially pressing. This invention provides a solution to this problem by using a "masterbatch".

It is known that the incorporation of a specific "masterbatch" can have significant influence on the colour, features and cost of spinning processes. A correct choice and design will condition the effectiveness of an additive and its compatibility with the polymer component of the fibre.

Hence, it is necessary to prepare a "masterbatch" with a support polymer achieving the dispersion of large concentrations of additives without modifying its characteristics during and after dispersion and enabling an increase in productivity during the spinning of the polyester fibres and filaments.

### Description of the Invention:

This invention describes a compounding and use of a polymer composition ("masterbatch") comprising polymethylmethacrylate as a support ("carrier") polymer for pigments selected from carbon black and titanium dioxide dispersed in the same, for incorporation during the extrusion process to the molten polyester polymers forming the fibres, the purpose of which is to achieve improved productivity in the spinning process.

This objective is achieved thanks to the optimum features that polymers of the methacrylate family provide when used as a carrier in the "masterbatch", in which at least one pigment selected from carbon black and titanium dioxide is dispersed. The element of said family used as support polymer "carrier" in the "masterbatch" is polymethylmethacrylate (PMMA).

This polymethylmethacrylate polymer, used as a support polymer in the "masterbatch", and the results obtained with its use will be used from here on to explain this invention conveniently.

Therefore, hereinafter, PMMA will be used as a polymer support.

Advantageously, the use of a "masterbatch" containing PMMA as a carrier does not cause processing problems due to degradation of this polymer during mixture with the polymer in which it is dosed, in the extruder.

PMMA is an inert material that is not compatible (miscible) with the thermoplastic polymers forming the fibres. It is an amorphous plastic, and its influence on these polymers is limited to its rheological properties, without producing any structural modification, therefore it can be used as a "carrier" in a "masterbatch".

Sometimes, this support polymer can be composed of mixtures of PMMA with one or a combination of at least two of the following polymers: polybutyleneterephthalate (PBT), polyethyleneterephthalate (PET), polytrimethyleneterephthalate (PTT), or polylactic acid (PLA), with the aim of optimizing the final properties of the "masterbatch".

As already mentioned, the polymeric composition of the invention is added to the molten polyester polymers forming the fibres during the extrusion process. The denomination "polyester" includes all the members of a family of polymers whose chain is formed by monomers joined by ester functions, such as polyethyleneterephthalate (PET), polybutyleneterephthalate (PBT), polytrimethyleneterephthalate (PTT), or polylactic acid (PLA) .

After successive research and testing, it has been defined that to achieve the desired objectives of improved productivity in the spinning process, the composition of the "masterbatch" this invention refers to will comprise preferably polymethylmethacrylate (PMMA) with a molecular weight of 10,000 - 500,000 g/mol, and will be present in an amount of 30% - 99% by weight of said concentrated polymeric composition or "masterbatch".

Likewise, it has been determined that the final concentration of PMMA in the polymer forming the fibres to be extruded will reach preferably up to 10% by weight in the final mixture, i.e., in the molten polymer, thus achieving very important increases in productivity in the spinning process.

The polymeric composition of this invention contains, in addition to PMMA, 1% - 70% by weight of pigments and optionally other polymers and dispersing agents. The percentage of pigments selected from carbon black or titanium dioxide depends, among other things, on the type and characteristics of said pigments, and the polymers that will be added.

The pigments used in the polymer composition "masterbatch" of this invention will be carbon black, or titanium dioxide ($TiO_2$). In this regard, this invention describes the existence of a surprising and unexpected synergistic effect, derived from the combination of the PMMA with each of these pigments. This combination strengthens the decreased orientation, enabling increased productivity without having to reach excessively high levels of dosage.

In addition, additives that can be used for preparing the polymeric composition are chosen from: lubricants, antistatic, plasticizers, stabilizers, antioxidants, compatibilizing agents and flame-retardants as well mixtures or combinations of these products.

If the support polymer is composed of mixtures of PMMA with other polymers, such as PBT, PET, PTT and PLA, with the aim of optimizing the final properties of the "masterbatch", these polymers will be present in amounts between 50% and 70% by weight of the polymeric composition.

The presence of dispersing agents is linked to the manufacturing process. Sometimes a pre-mix phase of the polymers and the pigments in presence of dispersing agents is necessary to achieve adequate dispersion of the pigments in the post-extrusion phase.

The concentrated polymeric composition of this invention will be dosed during the extrusion process of the molten polyester polymers forming fibres.

The rheological influence of the addition of the polymeric composition in said molten mass is materialized in a reduction in the degree of orientation of the additivated polymer, a reduction that will depend on the dosage applied.

The spinning system used to obtain the yarn or fibre, from the additivated molten material with the "masterbatch" of this invention, will be that of fusion spinning, as they are synthetic fibres and thermoplastic polymers, especially polyester polymers.

The yarn or spun fibres are generally from the family of pre-oriented yarn (POY), used mainly in the manufacture of textured yarn.

The polymeric composition of this invention may be applied to the manufacture of this pre-oriented yarn (POY) with the aim of spinning them at a greater speed but with a rheological behaviour (load-elongation curve) similar to when they are spun at less speed without incorporating "masterbatch".

Pre-oriented yarn are threads that are collected at speeds between 500 and 4500 m/min. This yarn has a fine biphasic structure (microstructure) with an oriented amorphous phase or mesomorphous embedded phase or integrated in a disoriented matrix, and with almost total absence of crystalline zones when the spinning speed is no greater than 3500 m/min.

The orientation of the POY yarn is completed in its subsequent processing, as is the case of texturing. Manufacturing of POY yarn enables increased productivity of about 30%, as well as excellent processing in the texturizing operation. POY yarn has a tenacity of about 18 CN/tex and elongation at break of about 150%. The load-elongation curve of the POY yarn globally shows an initial elastic behaviour (initial module area), followed by a wide fluence zone (increase of elongation with hardly any increase in load) ; this fluence zone is followed by a reinforcement zone, with a linear section, until breakage. An interesting parameter of the load-elongation curve of POY yarn refers to the load or force corresponding to 100% lengthening. The point corresponding to these coordinates is habitually located in the reinforcement zone. This load that causes a 100% elongation can be considered as a global orientation parameter

(orientation index, $I_{100}$). The lower its value, the less oriented the fine structure of the yarn will be and the more deformable it will be (ductility/stretchability) and the less its rigidity. In this context it will be known as orientation index or $I_{100}$.

When the spinning speed is increased, the elongation at break of the POY yarn is reduced and the $I_{100}$ increases. The spinning speed of POY yarn destined for texturing is limited by the fact that they must have a certain elongation at break, or the force or load you have to apply to produce a 100% elongation ($I_{100}$) in the POY yarn.

If, by addition to the molten mass of the polymer to be extruded, the elongation at break of a POY yarn may increase, it will also present a decrease of the $I_{100}$. This will result in the possibility of increasing the spinning speed if the $I_{100}$ is not greater than that corresponding to the spinning speed when referring to a molten non-additivated polymer.

The results obtained by applying the polymer composition of the invention clearly prove its efficacy to overcome the technical problem that arises when increasing performance in the spinning process.

With the dosing of a polymeric composition "masterbatch" that has PMMA as a "carrier" polymer and pigments such as those described above, results are obtained that prove the elongation or deformation qualities given to these fibres are greater than those of a "masterbatch" containing another type of carrier with the same pigment or additive, as well as a greater capacity for elongation (ductility) to that which is has in itself under the same extrusion conditions.

In addition to greater regularity in the extrusion process during the spinning, the yarn obtained applying a "masterbatch" with PMMA as a support polymer and pigments such as those described here, have a fine structure with a lower degree of orientation enabling an increased speed of thread collection, resulting in much higher productivity (spinning speed) than when other polymers are used as carriers. With regard to this, results show that increases of spinning speed greater than 20% can be achieved.

The efficacy of the addition with the polymeric composition "masterbatch" of the present invention is confirmed by the fact that when the concentration of polymethylmethacrylate (PMMA) in the molten mass of the fibre-forming polymer manufactured is increased, the effects obtained also increase, maintaining the spinning speed constant.

In one of the possible embodiments of the invention, the concentrated polymeric composition comprises 30-50% by weight of polymethylmethacrylate (PMMA) as support polymer, 50-70% by weight of PBT, and 1-5% by weight of additive and/or pigment.

This polymeric composition is added in an amount of 4% - 8% by weight to the polymer forming the fibres and filaments, and the polymethylmethacrylate is present in an amount of 1.6% - 3.2% by weight in the polymer.

The application of a composition such as the one described reduces the orientation index of the pre-oriented POY 290/48 dtex polyester yarn to values between 15.4 (CN/tex) and 11.8 (CN/tex) when are spun at speeds of 2000 - 4500m/min.

A preferred embodiment of the invention is a concentrated polymeric composition comprising 60-90% by weight of polymethylmethacrylate (PMMA) as support polymer, and at least an additive and/or a pigment in an amount of 10% - 40% by weight of said polymeric composition.

Yet another preferred embodiment of the invention is a concentrated polymeric composition preferably comprising 60-80% by weight of polymethylmethacrylate (PMMA) as support polymer and 20-40% by weight of carbon black as a pigment.

This concentrated polymeric composition is added to the molten fibre and filament-forming polyester polymers in the extrusion process, in an amount of 2% - 8% by weight, so that the polymethylmethacrylate is present in amounts of 1.4% - 5.6% by weight in said molten mass of the polymer forming the fibres and filaments.

This second preferred composition reduces the orientation index of the pre-oriented POY 290 dtex polyester yarn to values between 11.7 (CN/tex) and 8.1 (CN/tex) when are spun at speeds of 2000 and 4500 m/min., and increases the elongation at break thereof to values between 152% and 186%.

The formulation of the previous "masterbatch" enables the two main components to be combined and concentrated to the maximum, namely the pigment and PMMA, enabling a final product that offers the best desired functionality at a perfectly viable dosage.

The known alternative to obtain the same functionality will consist in adding 2 different masterbatches: one to increase the productivity and the other to modify the colour. In this case, the total cost of the two masterbatches would be much higher and the total dosage level would be so high that it would affect both processability as well as the final properties of the yarn.

The POY yarn added to this "masterbatch" are subsequently textured, enabling textured yarn to be obtained presenting an increase in the values of elongation at break of 15% - 35%, thus increasing productivity in spinning of up to 22.3% with non-additivated textured polyester yarn.

Another preferred embodiment of the invention is a concentrated polymeric composition comprising 50-95% by weight of polymethylmethacrylate (PMMA) as support polymer and 5-50% by weight of titanium dioxide ($TiO_2$) as a pigment.

Said polymeric composition is added to the molten mass of the polyester polymer in an amount of 2% - 8% by weight of the molten mass, and the polymethylmethacrylate is present in an amount of 1.7% - 6.8% by weight in the molten mass.

This third composition enables a decrease in the orientation index of the pre-oriented polyester yarn POY to values from 12.1 (CN/tex) - 7.9 (CN/tex), and an increase in the elongation at break to values of 152% - 185%, when yarns are spun at speed of 2000-4500 m/min.

The POY yarn added to this "masterbatch" are subsequently textured, enabling doubled textured yarn to be obtained with an elongation at break of 22% - 37.2%, thus increasing productivity in spinning of up to 22.3% with non-additivated textured polyester yarn.

**Manufacturing method of the "masterbatch":**

The manufacturing process of a "masterbatch" comprises an extrusion phase and optionally a prior pre-mixture phase.

Sometimes this first pre-mixture phase is not necessary for some polymers, pigments and additives, and they can be dosed directly in the extrusion phase.

Pre-mixture phase:

This first phase takes place in the equipment called turbo-mixers or similar, where the pigments and/or additives are pre-dispersed by the use of one or more dispersing agents, compatible with the base polymer and with the polymer component of the fibre to be manufactured. For the pre-dispersion to be optimum, any lumps must be broken up mechanically by the blades of the turbo-mixer and the subsequent soaking or impregnation of the pigment particles. The lumps are formed as a result of strong interaction between the pigment particles. This phenomenon is particularly present in cases of high concentrations of organic pigment. Soaking is understood as covering the surface of a solid with a liquid: The dispersing agents, such as waxes, melt at the temperatures reached in the turbo-mixer and cover the other components in the mixture.

Extrusion phase:

The main goal of this phase is to obtain a good dispersion (dispersed mixture) and homogenization (distributive mixture) of the "masterbatch" components. A wide variety of extrusion equipment exists and choosing which to use will depend on the characteristics and properties of the product to be extruded. The equipment used in this invention to manufacture a PMMA based "masterbatch" is a counter-rotating twin-screw extruder, characterised by the fact that its screws rotate in the same direction. This extrusion equipment transfers a large amount of mechanical energy (called shear force) to the material, enabling large amounts of pigments and/or additives to be dispersed. The configuration of the screws is essential in order to guarantee good productivity and optimum product quality. The screws are composed of different assembled elements, which according to their geometry and position, distribute, disperse or transport the material. The treatment of the material during its passage through the extruding equipment depends on the configuration of the screw, the type of elements used being as important as the position of the screw. As an example, two configurations with the same elements but different distribution in the screw with produce extruded material of different quality (dispersion, distribution, colour qualities). Other external elements that influence the extrusion are the dosers, baths, drying systems and the pelletisers (granulators).

**Application method of the "masterbatch":**

The preferred method for application of the "masterbatch" polymeric composition is carried out with the following procedure:

The starting point for fusion spinning are the thermoplastic polymers in the form of chips or pellets. These are melted inside and extruder, forming a viscous fluid mass. The viscous mass is dosed by means of a volumetric pump to a filtration system and a plate with holes called spinneret. The molten polymer is forced through spinneret holes at high pressure, obtaining a series of filaments that together will form the yarn. The cooling of the viscous mass at the outlet of the spinneret is carried out by a controlled flow of air, the filaments are then lubricated with a sizing oil emulsion and are finally wound on a bobbin.

The addition of the "masterbatch" polymeric composition of this invention is carried out in the extrusion area of the molten polymer that forms the fibre, becoming solid by means of a gravimetric system or in viscous form by means of lateral extruder.

The profile of temperatures applied in the extruder in this development is 290 - 300° C. This profile can be modified according to the dimensions of the extruder, the time the molten mass is there and other parameters that may vary according to the different extrusion equipment.

**Description of the drawings.**

Figure 1 shows the evolution of the elongation at break and of the orientation index of the yarns according to the dosage of a masterbatch at 15% PMMA in PBT in the molten mass of the polymer to be extruded, always at the same spinning speed (3000 m/min.).

Figure 2 shows the evolution of the orientation index according to the PMMA concentration in the molten mass of the polymer to be extruded, at different spinning speeds.

Figure 3 shows the stretching ratio in texturing (residual stretching) according to the orientation index for different elongation at break of the textured yarn.

Figure 4 shows the evolution of the orientation index according to the PMMA concentration in the molten mass of the polymer to be extruded, at two different spinning speeds. In this case the "masterbatch" is a combination of PMMA and PBT.

Figure 5 shows the evolution of the orientation index according to the PMMA concentration in the molten mass of the polymer to be extruded at two different spinning speeds, using carbon black as an additive.

Figure 6 shows the load/elongation curves of a yarn picked up at a speed of 3500m/min. using carbon black as an additive, with or without using PMMA as a carrier.

Figure 7 shows the load/elongation curves obtained when applying the same concentrations of PMMA in two different formulations of the polymer composition or "masterbatch", as well as the polymer base (PET RT-20).

Figure 8 shows the load/elongation curves obtained when using PMMA / $TiO_2$ "masterbatch" at different dosages.

Figure 9 shows the evolution of the elongation at break and of the orientation index according to the PMMA concentration (%) in the molten mass of polyester.

Figure 10 shows the load/elongation curves of textured yarn obtained when using a PMMA/$TiO_2$ "masterbatch" at different dosages.

Figure 11 shows the evolution of the elongation at break according to the PMMA concentration (%) PMMA in the molten mass of polyester when using a PMMA / $TiO_2$ "masterbatch" at different dosages.

Figure 12 shows the load/elongation curves of pre-oriented yarn resulting from the addition of a PMMA/carbon black "masterbatch" at two different dosages.

**Description of an embodiment of the invention:**

A concentrated polymeric composition (also referred to in this field as "masterbatch") for the addition of fibre and/or filaments of thermoplastic polymers during the extrusion process is formed by: (a) A polymethylmethacrylate (PMMA) with a molecular weight of 100.000 g/mol as a support ("carrier") polymer, and (b) an additive and/or a pigment.

The polymeric composition spans a group of PMMA/ pigment compositions of 30/70% - 99/1%, obtaining very satisfactory results, as they enable a reduction in the orientation index and an increase in the elongation at break, and thus enable an increased spinning speed.

The final concentration of PMMA in the polymer forming the fibres to be extruded may reach 10% by weight of the final mixture (namely "masterbatch" with fibres and/or filaments of thermoplastic polymers), this range of concentration providing the desired results.

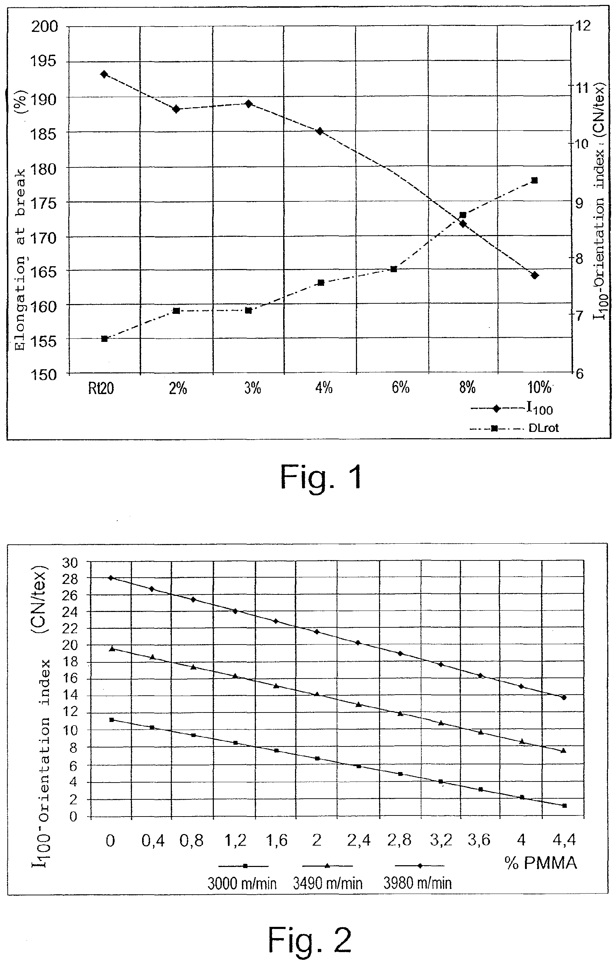

The results mentioned above can be seen in Figure 1, where it is clearly visible that, for the same spinning speed, the orientation index decreases as the concentration of PMMA increases, which acts as a carrier or support in the "masterbatch" polymeric composition. The results are less oriented yarns (more deformable), allowing higher spinning speeds and at the same time elongation at break as is characteristic of non-additivated yarn.

The elongation at break, contrary to what happens with the orientation index, evolves in such a manner that, as can be seen in Figure 1, when increasing the concentration of PMMA in the polymer the elongation at break also increases, enabling an increase in spinning speed with the resulting increased productivity.

Figure 2 refers to the evolution of the orientation index according to the PMMA concentration in the molten mass for different spinning speeds. In it, one can observe that the addition of 3.2% of PMMA to the molten mass when spinning at 3490 m/min. results in yarn with the same orientation index ($I_{100}$) as when spinning at 3000 m/min. in absence of PMMA, resulting in increased productivity.

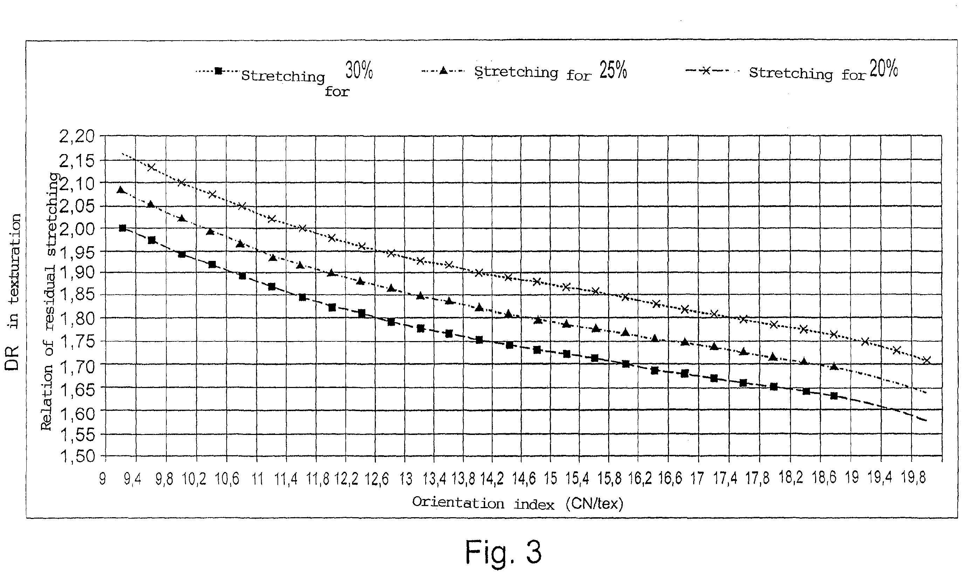

Figure 3 shows the residual stretching ratio (stretching in the texturisation operation) according to the orientation index ($I_{100}$) of the POY yarn for textured yarn with different elongation to breakage. In it, one can observe that, for a certain elongation at break of the textured yarn, the lower $I_{100}$ is, the greater the stretching ratio that can be applied in the texturising machine. On the other hand, for a certain $I_{100}$ value, the greater the elongation at break of the textured yarn, the less the residual stretching ratio. This is logical, as the greater the elongation at break of the textured yarn; the less the orientation (residual stretching ratio) applied in the texturiser.

**Examples of embodiment:**

Example 1 (comparative):

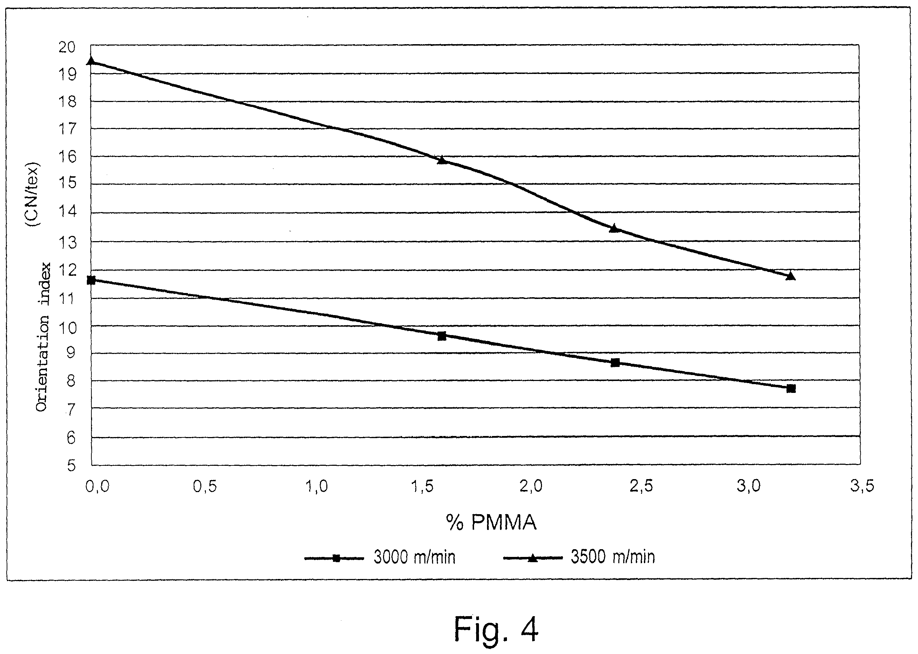

The results of the tests presented in Table 1 and represented in Figure 4 were obtained by adding to a molten mass of polyester in the extrusion process a polymeric composition ("masterbatch") in the form of of pellets or chips according to a gravimetric addition procedure. The "masterbatch" contained 40% of PMMA and 60% by weight of PBT. Once the "masterbatch" was added, the mixture was melted and mixed with the molten polymer in the extruder at a temperature of 290 - 300° C forming a fluid viscous mass which was forced through the holes in the spinneret at high pressure, creating filaments that were collected at 3500 m/min. forming a 290/48 dtex POY yarn.

Table 1 contains the values of the orientation index ($I_{100}$) when spinning at 3000 and 3500 m/min. according to the percentage of PMMA added to the polymer to be extruded. Examining them shows that incorporating 3.2% of PMMA (8% of the indicated "masterbatch") results in the same $I_{100}$ value, spinning at a speed of 3500 m/min. as when spinning at 3000 m/min. in absence of PMMA.

Table 1

| Masterbatch dosage (%) | PMMA concentration (%) | Orientation index (CN/Tex) | |
|---|---|---|---|
| | | 3000 m/min. | 3500 m/min. |
| 0 | 0 | 11.7 | 19.4 |
| 4 | 1.6 | 9.7 | 15.9 |
| 6 | 2.4 | 8.7 | 13.4 |
| 8 | 3.2 | 7.7 | 11.8 |

Example 2:

The results of the tests presented in Table 2 were obtained by adding to a molten mass of polyester in the extrusion process a "masterbatch" polymeric composition in the form of pellets or chips according to a gravimetric addition procedure. The polymeric composition contained 70% by weight of PMMA and 30% by weight of carbon black as additive. The procedure used for the addition and obtaining the yarn or fibre was the same as described in example 1, obtaining finally a POY 290/48 dtex polyester yarn.

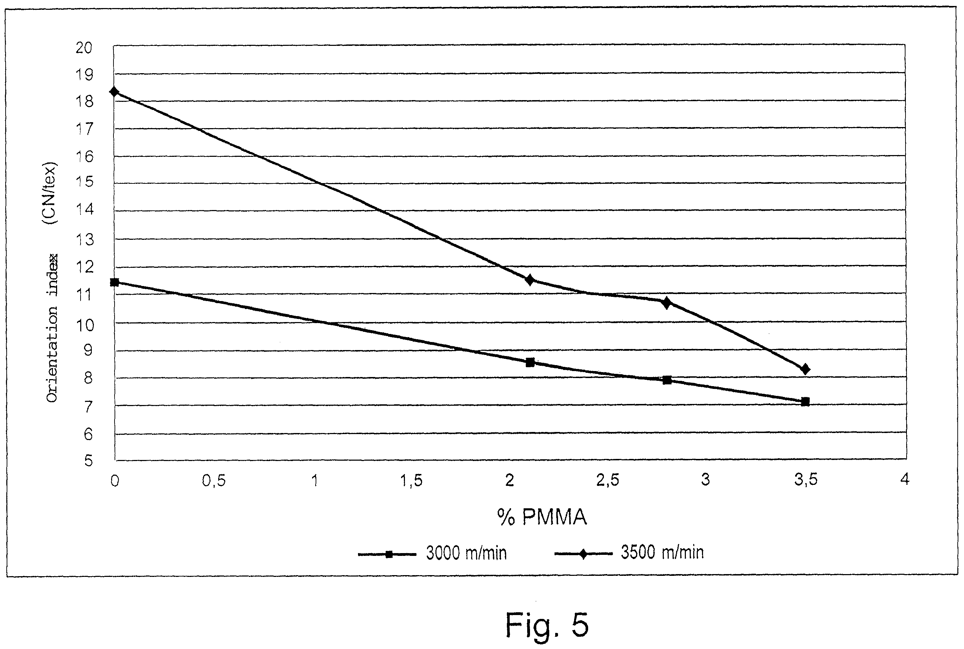

Table 2 shows the value of the orientation index ($I_{100}$) when spinning at 3000 and 3500 m/min. according to the percentage of PMMA incorporated to the molten mass from the indicated "masterbatch". In it, one can see that the presence of 2.1% of PMMA spinning at 3500 m/min. leads to $I_{100}$ the same as when spinning at 3000 m/min. in absence of PMMA. The values of Table 2 are represented graphically in Figure 5.

Table 2

| Masterbatch dosage (%) | PMMA concentration (%) | Orientation index (CN/Tex) | |
|---|---|---|---|
| | | 3000 m/min. | 3500 m/min. |
| 0 | 0 | 11.5 | 18.4 |
| 3 | 2.1 | 8.6 | 11.6 |
| 4 | 2.8 | 7.9 | 10.7 |
| 5 | 3.5 | 7.1 | 8.3 |

Analysing examples 1 and 2 together, one can clearly detect a synergistic effect as a result of the combined use of PMMA with pigment (carbon black) in the same "masterbatch". Comparing the tables, it is noticeable that the PMMA content necessary to preserve the orientation index of the original yarn, without additives and spun at 3000m/min., decreases from 3.2% to 2.1% if the "masterbatch" also incorporates carbon black.

The formulation of this "masterbatch" enables the two main components to be combined and concentrated to the maximum, namely the pigment and PMMA, enabling a final product that offers all desired functionality at a perfectly viable dosage.

The known alternative to obtain the same functionality will consist in adding 2 different masterbatches: one to increase the productivity and the other to modify the colour. In this case, the total cost of both masterbatch would be much higher and the global dosage level could easily reach 8 or 10%. These dosage levels are generally not viable, as they reduce excessively the percentage of base, harming the processability and final properties.

Example 3:

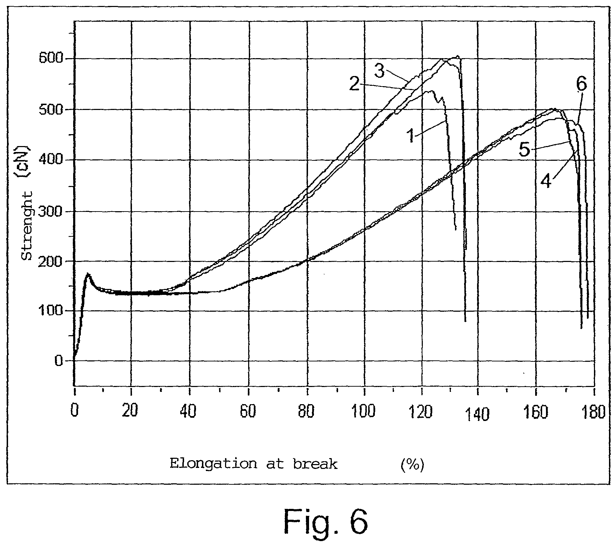

The results shown in Table 3 and Figure 6 correspond to tests carried out to determine the effects of PMMA on the increased elongation in a polyester POY 290/48 dtex yarn using carbon black as a pigment and a PBT as carrier in one case, and PMMA in the other. The spinning speed was maintained constant at 3500 m/min., as well as the rest of the extrusion and spinning process conditions.

Both "masterbatches" contained a weight ratio of 70% support polymer (PMMA or PBT) and 30% carbon black, and were dosed at 4% with regard to the molten polymer to be extruded.

Curves 1-3 in Figure 6 correspond to the "masterbatch" that contained a weight ratio of 70% PBT / 30% carbon black, and curves 4-6 correspond to the "masterbatch" containing a weight ratio of 70% PMMA / 30% carbon black.

In Table 3 it can be seen that the presence of PMMA produces a yarn with an elongation at break notably greater and an orientation index much lower than when PBT was used as carbon black pigment support. This highlights the much greater efficacy of PMMA to reduce the orientation of the POY polyester yarn.

Table 3

| Masterbatch composition | Tenacity (CN/Tex) | Elongation at break (%) | Orientation index (CN/Tex) |
| --- | --- | --- | --- |
| 70% PBT / 30% carbon black | 20.0 | 127.7 | 15.5 |
| 70% PMMA/ 30% carbon black | 17.1 | 166.3 | 9.1 |

Example 4:

The POY 210/48 dtex polyester yarn was prepared at a spinning speed of 3500 m/min., one of them without addition and the other with additivation of a "masterbatch" with a weight content of 85% PMMA / 15% $TiO_2$, and another with a "masterbatch" with a weight content of 70% PMMA / 30% carbon black. The two additivated yarns contained in both cases 2.8% by weight of PMMA with regard to the polymer forming the fibre. Another yarn was additivated with PBT / carbon black with a weight content of 70% PBT / 30% carbon black. The conditions of the spinning process were the same as in example 1.

From the values in Table 4, it can again be deduced that the use of PMMA as a support for the "masterbatch" results in higher elongation at break breakage values and lower orientation indices. It can also be seen that the presence of carbon black in a "masterbatch" produces a certain effect on the traction parameters.

Table 4

| Test | Masterbatch composition | Tenacity (CN/Tex) | Elongation at break (%) | Orientation index (CN/Tex) |
| --- | --- | --- | --- | --- |
| 1 | - | 23.5 | 123.4 | 18.9 |
| 2 | 70% PMMA / 30% carbon black | 15.1 | 183.2 | 6.9 |
| 3 | 85% PMMA / 15% $TiO_2$ | 16.6 | 171.0 | 8.1 |
| 4 | 70% PBT / 30% carbon black | 20.5 | 127.0 | 16.0 |

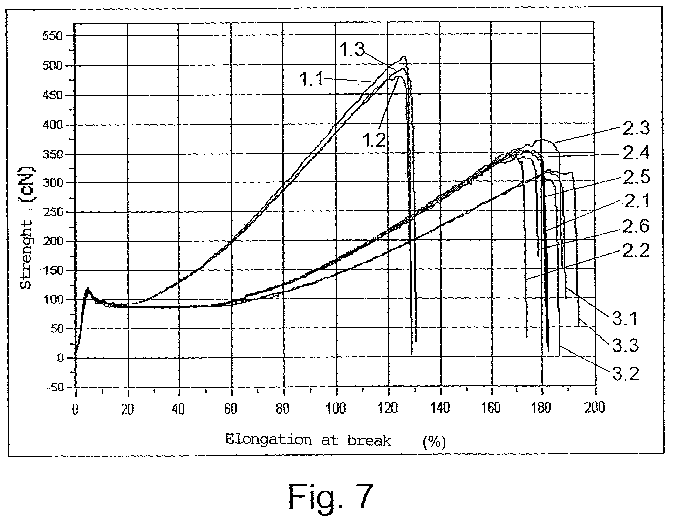

The results in Table 5 correspond to parameters of the load/elongation curve of polyester POY 210 dtex yarn prepared in the same extrusion conditions, maintaining the same spinning speed of 3500 m/min. The results have come from the load/elongation curves of Figure 7 that correspond to a non-additivated yarn (RT20) (curves 1.1)-1.3, and two additivated yarns with a 70% PMMA / 30% pigment "masterbatch". The pigment used in one case was Titanium dioxide (Figure 7, curves 2.1-2.6) and in the other case Carbon Black (Figure 7, curves 3.1-3.3), and both additivated yarns contained 2.8% PMMA with regard to the polymer forming the fibre.

Table 5 confirms the decrease in orientation of the fibres ($I_{100}$ decrease) when using PMMA as "masterbatch" support, both when the additive used is carbon black as well as when it is titanium dioxide. This proves the effectiveness of using PMMA as support for an additive, as it enables increased elongation at breakage of the polyester POY yarn and therefore enables increased spinning speed, meaning improved performance in this operation.

Table 5

| Test | Masterbatch composition | Tenacity (CN/Tex) | Average tenacity (CN/Tex) | Elongation at break (%) | Average elongation at break (%) | $I_{100}$ (CN/Tex) | Average $I_{100}$ (CN/Tex) |
|---|---|---|---|---|---|---|---|
| 1.1 | | 24.4 | | 126.3 | | 19.0 | |
| 1.2 | - | 22.9 | 23.6 | 123.9 | 125.5 | 18.3 | 18.5 |
| 1.3 | | 23.5 | | 126.2 | | 18.3 | |
| 2.1 | | 16.8 | | 176.6 | | 7.9 | |
| 2.2 | | 16.4 | | 168.4 | | 8.0 | |
| 2.3 | 85% PMMA/ 15% TiO$_2$ (2.8% PMMA + 0.5% TiO$_2$) | 17.7 | | 179.7 | | 7.9 | |
| 2.4 | | 17.0 | 16.8 | 171.0 | 173.3 | 8.0 | 7.9 |
| 2.5 | | 16.8 | | 171.4 | | 7.9 | |
| 2.6 | | 16.2 | | 172.7 | | 7.8 | |
| 3.1 | 70% PMMA / 30% carbon black (2.8% PMMA + 1.2% carbon black) | 15.0 | | 181.8 | | 6.7 | |
| 3.2 | | 14.8 | 15.0 | 179.5 | 181.4 | 6.81 | 6.8 |
| 3.3 | | 15.2 | | 183.1 | | 6.81 | |

Example 5:

Comparative study of a POY PES Standard yarn (RT20) and a yarn additivated with a "masterbatch" with a weight content of 85% PMMA / 15% TiO$_2$.

Polyester POY 290 dtex were prepared at a spinning speed of 3500 m/min. additivated with different doses of a "masterbatch" of 85% PMMA / 15% TiO$_2$.

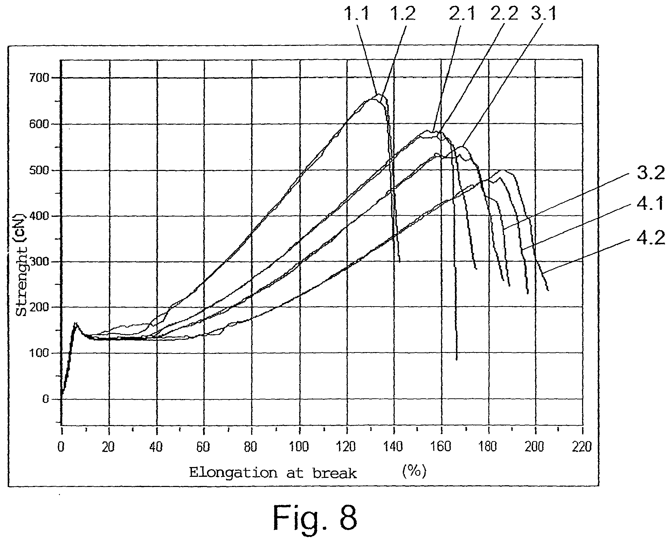

Figure 8 contains the load-elongation curves of the POY yarn obtained, in which curves 1.1 and 1.2 correspond to POY yarn of PES Standard (RT20), curves 2.1 and 2.2 correspond to a 2% "masterbatch" dosage with a weight content of 85% PMMA / 15% TiO$_2$, curves 3.1 and 3.2 correspond to 3% dosing of the same "masterbatch", and curves 4.1 and 4.2 correspond to 4% dosing of the same "masterbatch".

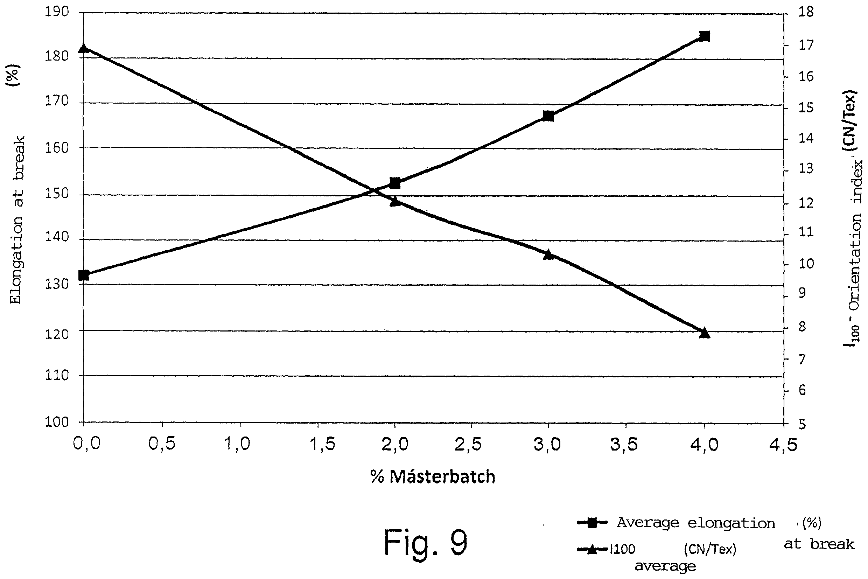

Table 6 indicates the doses applied to the molten polyester masses to be extruded and parameters of these curves. Figure 9 represents the elongation at break and the orientation index of these POY yarn according to the dosage masterbatch in the molten polymer. In it one can see clearly that the elongation at break increases and the orientation index decreases as the concentration of PMMA increases in the molten mass.

Table 6

| Test | Masterbatch dosage | Tenacity (CN/Tex) | Average tenacity (CN/Tex) | Elongation at break (%) | Average elongation at break (%) | $I_{100}$ (CN/Tex) | Average $I_{100}$ (CN/Tex) |
|---|---|---|---|---|---|---|---|
| 1.1 | 0% | 22.9 | 22.7 | 133.1 | 132.0 | 16.7 | 16.9 |
| 1.2 | | 22.5 | | 130.8 | | 17.0 | |
| 2.1 | 2% | 20.2 | 19.9 | 153.9 | 152.6 | 12.1 | 12.1 |
| 2.2 | | 19.7 | | 151.3 | | 12.0 | |
| 3.1 | 3% | 19.0 | 18.7 | 167.4 | 167.4 | 10.3 | 10.3 |
| 3.2 | | 18.3 | | 167.3 | | 10.4 | |
| 4.1 | 4% | 16.6 | 16.9 | 184.7 | 185.1 | 7.9 | 7.9 |
| 4.2 | | 17.2 | | 185.4 | | 7.9 | |

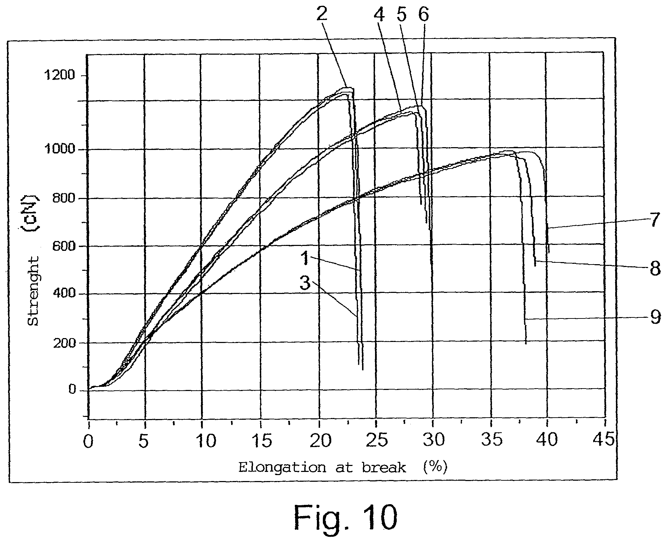

The POY yarn prepared was textured by applying an elongation of 1,8, resulting in doubled textured yarn of 340 dtex. Traction tests were carried out to obtain the load-elongation curves of these textured yarns, which are shown in figure 10, and where curves 1-3 correspond to additivated yarns with a 2% dosage of the aforementioned "masterbatch" (with a weight content of 85% PMMA / 15% $TiO_2$), curves 4-6 correspond to 3% dosing of said "masterbatch", and curves 7-9 correspond to 4% dosing of this "masterbatch". From this, the tenacity and the elongation at break was calculated, shown in Table 7.

Table 7

| Masterbatch dosage | Average tenacity (CN/Tex) | Average elongation at break (%) |
|---|---|---|
| 0% | -------- | 12.3 |
| 2% | 35.9 | 22.3 |
| 3% | 33.7 | 28.6 |
| 4% | 28.6 | 37.2 |

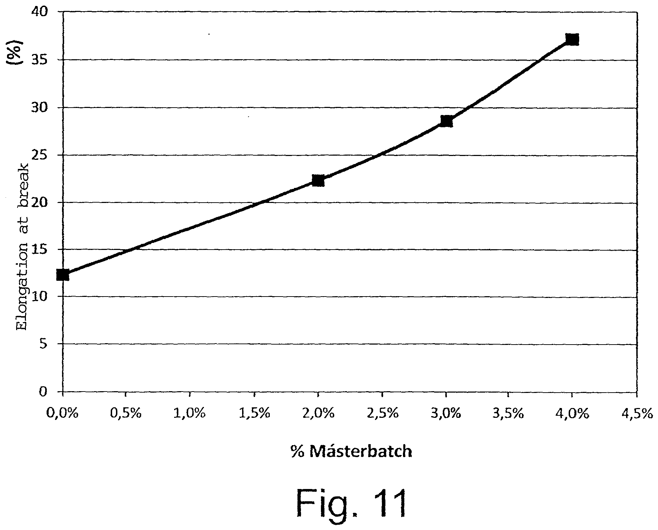

Figure 11 shows the elongation at break of textured yarn according to the dosage of masterbatch in the molten mass, revealing that the elongation increases as the dose increases.

As can be seen, the non-additivated polyester yarn after texturing applying an elongation ratio of 1.8 has an elongation at break of 12.3%, if the yarn has 2.5% (3% "masterbatch") PMMA, its elongation at break is 28.6%, a value considered normal in textured polyester yarn. For the non-additivated textured yarn to display an elongation at break of 28.6%, it would be necessary to texture it with an elongation ratio of 1.57, which would lead to a final of 390 dtex. The possibility of applying an elongation ratio of 1.8 in the texturisation instead of 1.57 implies a 15% increase in productivity.

The calculations are obtained by applying the following formulas:

$$DR \times BREAKAGE\ LENGTH = cte.$$

$$\%\Delta_{PROD.} = (DR_1 - DR_2)/DR_2 \times 100$$

Where:

DR: Elongation ratio

$$BREAKAGE\ LENGTH = 100 + elongation\ at\ break$$

$$\%\Delta_{PROD.} = Increased\ productivity$$

Therefore:

$$1.8 \times 112.3 = DR_2 \times 128.6;\ DR_2 = 1.57$$

$$(1.8-1.57)/\ 1.57 \times 100 = 15\%$$

If the concentration of PMMA in the polymer forming the yarn were 3.6% (4% "masterbatch"), the elongation at break would be 37.2%, and to achieve this in a non-additivated yarn it would be necessary to texture it with a elongation ratio of 1.47, resulting in a 416 dtex yarn. In this case (3.6% additivation of PMMA) there would be a 22.3% increase in productivity.

Example 6:

Comparison between two POY polyester yarns, one of non-additivated polymer (Standard RT20) and another of polymer additivated with 4% of a "masterbatch" with a weight content of 70% PBT / 30% carbon black.

Two POY polyester 290 dtex yarns were prepared at a spinning speed of 3500 m/min. One of them was manufactured from a standard polymer (RT 20) and the other from a polymer additivated with 4% of a 70% PBT / 30% carbon black "masterbatch". Table 8 contains parameters of the load/elongation curve of these POY yarns. As indicated above (Table 4), additivation with a "masterbatch" with a weight content of 70% PBT / 30% carbon black leads to a certain elongation at break (greater deformability and stretchability) as well as a reduction in the orientation index of the polyester POY yarn. It should be kept in mind that in this case, the carbon black content in the polymer forming the yarn was 1.2%.

Table 8

| POY yarn | Average elongation at break (%) | $I_{100}$ (CN/Tex) |
|---|---|---|
| Non-additivated PET RT20 | 134.2 | 17.0 |
| Additivated with 4% of masterbatch | 139.7 | 14.3 |

To know how these effects (increased elongation at break and reduced orientation index) can be seen in the properties of the corresponding textured yarn, the two POY yarns were textured applying an elongation ratio of a 1.7, from which texturize yarn of 360 dtex was obtained, the tenacity and elongation at breakage of which is indicated in Table 9. The results of Table 9 show that the reduced orientation index of the additivated POY yarn results in a slightly greater elongation at breakage of the corresponding textured yarn.

Table 9

| Precursor POY yarn | Average tenacity (CN/Tex) | Elongation at break (%) |
|---|---|---|
| Non-additivated PET RT20 | 37.1 | 21.7 |
| Additivated with 4% masterbatch | 34.4 | 23.6 |

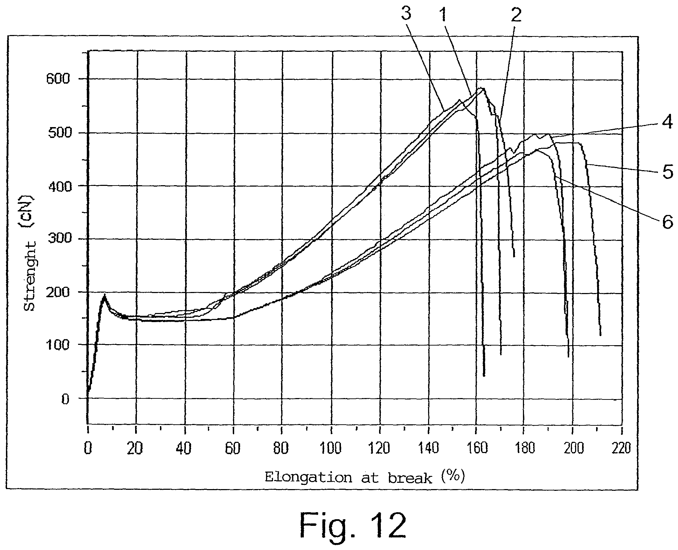

In order to differentiate the effect of additivation with a "masterbatch" PMMA / carbon black from those that result from a PBT / carbon black "masterbatch", polyester POY yarn was produced from the polymers additivated with different concentrations of a "masterbatch" with a content of 70% PMMA / 30% by weight of carbon black. The POY yarn was prepared with spinning speeds of 3000 and 3500 m/min., the molten polymer was additivated with 3% and 5% of this "masterbatch" and the POY yarn obtained had 290 dtex. Figure 12 shows the load/elongation curves of POY yarn resulting from spinning at a speed of 3500m/min. In it, curves 1-3 correspond to a yarn additivated with a "masterbatch" with a content of 70% PMMA / 30% by weight of carbon black and dosed at 3% by weight in the polymer forming the yarn, and curves 4-6 correspond to a yarn additivated with the same "masterbatch" but dosed at 5% in the polymer forming the yarns. The traction parameters are summarised in Table 10.

From the values on this table, which also include those obtained when spinning at 3000m/min, it can be deduced that additivation of the molten polymer with a "masterbatch" containing 70% PMMA / 30% by weight of carbon black results in high values of elongation at break and low values of orientation index of the corresponding POY yarn. The higher the percentage of additivation, the greater the elongation at break and the lower the orientation index. In addition, an increase of spinning speed, maintaining the percentage of additivation constant, means, as could be expected, a decrease in the elongation at break and an increased orientation index.

Table 10

| Additivation | | | Spinning speed (m/min.) | Average tenacity (CN/Tex) | Elongation at break (%) | $I_{100}$ (CN/Tex) |
|---|---|---|---|---|---|---|
| Masterbatch (%) | PMMA (%) | carbon black (%) | | | | |
| 3% | 2.1% | 0.9% | 3000 | 18.6 | 198.9 | 8.1 |
| | | | 3500 | 19.9 | 159.3 | 11.5 |
| 5% | 3.5% | 1.5% | 3000 | 17.2 | 209.0 | 7.2 |
| | | | 3500 | 16.7 | 190.6 | 8.0 |

Taking into account that a 4% additivation with a 70% PBT / 30% carbon black "masterbatch", spinning at 3500 m/min., results in an elongation at break of 139.7% and an orientation index of 14.3 CN/tex, it is evident that the use of PMMA as a support for the carbon black leads to much better results than when PBT is used as a support (see Table 4).

Example 7:

Comparative study of the influence of dosing with different percentages of a "masterbatch" with a weight content of 70% PMMA / 30% carbon black.

Five POY polyester 290 dtex yarns were prepared at a spinning speed of 3500 m/min. The molten mass extruded to manufacture these yarns is characterised in that some of them had no additivation, another had 4% additivation of a "masterbatch" with a weight content of 70% PBT / 30% carbon black, and the other three were additivated with 3, 4 and 5% respectively, of a "masterbatch" with a weight content of 70% PMMA / 30% carbon black. Table 11 contains the most important traction parameters deduced from the corresponding load-elongation curves (not shown). The values on this table confirm that the presence or additivation with carbon black with PBT as a carrier produces certain favourable effects in the elongation at break (increasing it) and on the orientation index (reducing it). What is most important in this example, in Table 11 it can also be seen that the greater the concentration of "masterbatch" in the molten mass, the greater the elongation at break and the lower the orientation index of the corresponding POY yarn. It can also be said that for the same concentration of carbon black (1.2%) there is an increase in elongation and a reduction of orientation when the presence of carbon black coincides with the presence of PMMA (2.8).

Table 11

| Test | Additivation | | | Average tenacity (CN/Tex) | Elongation at break (%) | $I_{100}$ (CN/Tex) |
|---|---|---|---|---|---|---|
| | Masterbatch (%) | PMMA (%) | carbon black (%) | | | |
| 1 | - | - | - | 23.2 | 134.2 | 17.0 |
| 2 | - | - | 1.2% | 20.5 | 139.7 | 14.3 |
| 3 | 3% | 2.1% | 0.9% | 18.9 | 152.6 | 11.7 |
| 4 | 4% | 2.8% | 1.2% | 18.5 | 167.3 | 10.2 |
| 5 | 5% | 3.5% | 1.5% | 16.5 | 186.1 | 8.1 |

With the polyester POY yard additivated with a "masterbatch" of 5%, a textured yarn was prepared applying an elongation rate of 1.95, resulting in a yarn with tenacity 30 CN/tex elongation at break of 25%.

By taking into consideration these values, the length of breakage that would correspond to a POY yarn additivated with 5% of "masterbatch" applying an elongation ratio of 1.8 would be:

$$(125 \times 1.95)/1.8 = 135\%$$

Taking into account that a POY yarn of Standard PES spun at 3500 m/min and then textured applying an elongation ration of 1.8 presents 12% elongation at break, for the Standard PES to have a length at breakage of 135%, the elongation ratio would have to be:

$$(112 \times 1.8)/135 = 1.49$$

So, the increased productivity derived from additivation of 5% of the 70% PMMA / 30% carbon black "masterbatch" would be:

$$(1.80 - 1.49) \times 100/1.49 = 20.8\%$$

To conclude, after the presentation of the tests carried out, it can be highlighted that the application of a "masterbatch" with a weight content of PMMA/$TiO_2$ ($TiO_2$ matting pigment) enables an increase in performance of 22.3%, and 20.8% when a PMMA/carbon black "masterbatch" is applied.

Having sufficiently described this invention using the Figures attached, it is easy to understand that any changes judged to be suitable may be made, whenever these changes do not alter of the essence of the invention summarised in the following claims.

**Claims**

1. Polyester synthetic yarn and fibers, of the type pre-oriented yarns, obtained by a fusion spinning method, the method comprising the addition of a *masterbatch* composition to the molten polyester polymers forming the yarn and fibers during the extrusion process, **characterised in that** the *masterbach* composition comprises:

   - 30% to 99% by weight of polymethylmethacrylate "PMMA" as a carrier; and
   - 1% to 70% by weight of a pigment selected from carbon black and titanium dioxide dispersed in the carrier, wherein the PMMA is present up to 10% by weight of the molten polyester polymers forming the yarn and fibers.

2. Polyester synthetic yarn and fibers according to claim 1, wherein the *masterbatch* composition comprises 30-90% by weight of PMMA and 10-70% by weight of the pigment selected from carbon black and titanium dioxide.

3. Polyester synthetic yarn and fibers according to any one of previous claims, wherein the *masterbatch* composition comprises between 60-80% by weight of PMMA and between 20-40% by weight of carbon black, the *masterbatch* composition being present from 2% to 8% by weight to the molten mass of the polyester polymers forming the yarn and fibers resulting in the molten mass a concentration of PMMA from 1.4% to 5.6% by weight.

4. Polyester synthetic yarn and fibers according to claim 3, wherein the pre-oriented POY 290 dtex polyester yarn has an orientation index comprised between 11.7 (CN/tex) and 8.1 (CN/tex) at a spun speed of 2000 - 4500 m/min, and an elongation at break comprised between 152% and 186%, wherein the orientation index is the load or force value causing a 100% lengthening of a pre-oriented yarn in the load-elongation curve of said pre-oriented yarn.

5. Polyester synthetic yarn and fibers according to any of claims 1 and 2, wherein the *masterbatch* composition comprises between 50-95% by weight of PMMA and between 5-50% by weight of titanium dioxide, the *masterbatch* composition being present from 2 to 8% by weight to the molten mass of the polyester polymers forming the yarn and fibers resulting the molten mass in a concentration of PMMA from 1.7% to 6.8% by weight.

6. Polyester synthetic yarn and fibers according to claim 5, wherein the pre-oriented yarn has an orientation index comprised between 12.1 (CN/tex) and 7.9 (CN/tex) at a spun speed of 2000 - 4000 m/min, and an elongation at break comprised between 152% and 185%, wherein the orientation index is the load or force value causing a 100% lengthening of a pre-oriented yarn in the load-elongation curve of said pre-oriented yarn.

7. Manufacturing method of polyester synthetic yarn and fibers, of the type pre-oriented yarns according to any one of previous claims by a fusion spinning method, the method comprising the addition of a *masterbatch* composition to the molten polyester polymers forming the yarn and fibers during the extrusion process, **characterised in that** the *masterbach* composition comprising 30% to 99% by weight of polymethylmethacrylate "PMMA" as a carrier and 1% to 70% by weight of a pigment selected from carbon black and titanium dioxide dispersed in the carrier is added into the molten polyester polymers forming the yarn and fibers at its extrusion phase or optionally in a prior pre-mixture phase, the PMMA being present up to 10% by weight of the molten polyester polymers forming the yarn and fibers.

8. Method according to claim 7, wherein the *masterbatch* composition comprises 30-90% by weight of PMMA and 10-70% by weight of the pigment selected from carbon black and titanium dioxide.

9. Method according to any one of claims 7 and 8, wherein the *masterbach* composition comprises 60-80% by weight of PMMA and 20-40% by weight of carbon black, the *masterbatch* composition being present from 2% to 8% by weight to the molten mass of the polyester polymer forming fibers and filaments resulting in the molten mass a concentration of PMMA from 1.4% to 5.6% by weight.

10. Method according to any one of claims 7 and 8, wherein the *masterbach* composition comprising 50-95% by weight of PMMA and 5-50% by weight of titanium dioxide is added into the molten polyester polymers forming the yarn and fibers, the *masterbatch* composition being present from 2% to 8% by weight to the molten mass of the polyester polymer forming fibers and filaments resulting in the molten mass a concentration of PMMA from 1.7% to 6.8% by weight.

11. Method according to any one of claims 7 to 10, wherein the *masterbatch* composition is added in the form of solid pellets by a gravimetric system in the extrusion area of the molten polyester polymer forming the yarn and fibers.

**12.** Method according to any one of claims 7 to 10, wherein the *masterbatch* composition is added in molten form by a lateral extruder in the extrusion area of the molten polyester polymer forming the yarn fibers.

**13.** Use of the polyester synthetic yarn and fibers as defined in any one of Claims 1 to 6 for manufacturing textured yarn.

**14.** A textured yarn prepared from polyester synthetic yarn and fibers as defined in any one of claims 1 to 6.

**Patentansprüche**

**1.** Polyestersynthesegarn und -fasern des Typs von vorverstreckten Garnen, erhalten durch ein Schmelzspinnverfahren, wobei das Verfahren die Hinzufügung einer Masterbatch-Zusammensetzung zu den geschmolzenen Polyesterpolymeren, die das Garn und die Fasern bilden, während des Extrusionsprozesses aufweist, **dadurch gekennzeichnet, dass** die Masterbatch-Zusammensetzung Folgendes aufweist:

- 30 bis 99 Gew.-% eines Polymethylmethacrylats "PMMA" als ein Träger; und
- 1 bis 70 Gew.-% eines Pigments, das aus Kohleschwarz und Titandioxid dispergiert in dem Träger ausgewählt ist, wobei das PMMA bis zu 10 Gew.-% der geschmolzenen Polyesterpolymere vorliegt, die das Garn und die Fasern bilden.

**2.** Polyestersynthesegarn und -fasern gemäß Anspruch 1, wobei die Masterbatch-Zusammensetzung 30-90 Gew.-% PMMA und 10-70 Gew.-% des Pigments aufweist, das aus Kohleschwarz und Titandioxid ausgewählt ist.

**3.** Polyestersynthesegarn und -fasern gemäß einem der vorhergehenden Ansprüche, wobei die Masterbatch-Zusammensetzung zwischen 60-80 Gew.-% PMMA und zwischen 20-40 Gew.-% Kohleschwarz aufweist, wobei die Masterbatch-Zusammensetzung von 2 bis 8 Gew.-% der geschmolzenen Masse der Polyesterpolymere vorliegt, die das Garn und Fasern bilden, was in der geschmolzenen Masse zu einer Konzentration von PMMA von 1,4 bis 5,6 Gew.-% führt.

**4.** Polyestersynthesegarn und -fasern gemäß Anspruch 3, wobei das vorverstreckte POY 290 dtex Polyestergarn einen Streckungsindex aufweist, der zwischen 11,7 (CN/tex) und 8,1 (CN/tex) bei einer Spinngeschwindigkeit von 2000-4500 m/min liegt, und eine Bruchdehnung, die zwischen 152% und 186% liegt, wobei der Streckungsindex der Last- oder Kraftwert ist, der eine 100%-Dehnung eines vorverstreckten Garns in der Lastdehnungskurve des vorverstreckten Garns verursacht.

**5.** Polyestersynthesegarn und -fasern gemäß einem der Ansprüche 1 bis 2, wobei die Masterbatch-Zusammensetzung zwischen 50- 95 Gew.-% PMMA und zwischen 5-50 Gew.-% Titandioxid aufweist, wobei die Masterbatch-Zusammensetzung von 2 bis 8 Gew.-% der geschmolzenen Masse der Polyesterpolymere vorliegt, die das Garn und die Fasern bilden, was in der geschmolzenen Masse zu einer Konzentration von PMMA von 1,7 bis 6,8 Gew.-% führt.

**6.** Polyestersynthesegarn und -fasern gemäß Anspruch 5, wobei das vorverstreckte Garn einen Streckungsindex aufweist, der zwischen 12,1 (CN/tex) und 7,9 (CN/tex) bei einer Spinngeschwindigkeit von 2000-4000 m/min liegt, und eine Bruchdehnung, die zwischen 152% und 185% liegt, wobei der Streckungsindex der Last- oder Kraftwert ist, der eine 100%-Dehnung eines vorverstreckten Garns in der Lastdehnungskurve des vorverstreckten Garns bewirkt.

**7.** Herstellungsverfahren für Polyestersynthesegarn und -fasern des Typs von vorverstreckten Garnen gemäß einem der vorhergehenden Ansprüche durch ein Schmelzspinnverfahren, wobei das Verfahren die Hinzufügung einer Masterbatch-Zusammensetzung zu den geschmolzenen Polyesterpolymeren, die das Garn und die Faser bilden, während des Extrusionsprozesses aufweist, **dadurch gekennzeichnet, dass** die Masterbatch-Zusammensetzung 30 bis 99 Gew.-% Polymethylmethacrylat "PMMA" als einen Träger aufweist und 1 bis 70 Gew.-% eines Pigments, das aus Kohleschwarz und Titandioxid ausgewählt ist, die in dem Träger dispergiert sind, in die geschmolzenen Polyesterpolymere, die das Garn und die Fasern bilden, in der Extrusionsphase hinzugefügt wird, oder optional in einer vorhergehenden Vormischphase, wobei das PMMA bis zu 10 Gew.-% der geschmolzenen Polyesterpolymere vorliegt, die das Garn und die Fasern bilden.

**8.** Verfahren gemäß Anspruch 7, bei dem die Masterbatch-Zusammensetzung 30 bis 90 Gew.-% PMMA und 10 bis 70 Gew.-% des Pigments aufweist, das aus Kohleschwarz und Titandioxid ausgewählt ist.

**9.** Verfahren gemäß einem der Ansprüche 7 und 8, bei dem die Masterbatch-Zusammensetzung 60-80 Gew.-% PMMA und 20-40 Gew.-% Kohleschwarz aufweist, wobei die Masterbatch-Zusammensetzung von 2 bis 8 Gew.-% der geschmolzenen Masse der Polyesterpolymere vorliegt, die Fasern und Garne bilden, was in der geschmolzenen Masse zu einer Konzentration von PMMA von 1,4 bis 5,6 Gew.-% führt.

**10.** Verfahren gemäß einem der Ansprüche 7 und 8, bei dem die Masterbatch-Zusammensetzung, die 50-95 Gew.-% PMMA und 5-50 Gew.-% Titandioxid aufweist, in die geschmolzenen Polyesterpolymere hinzugefügt wird, die das Garn und die Fasern bilden, wobei die Masterbatch-Zusammensetzung von 2 bis 8 Gew.-% der geschmolzenen Masse des Polyesterpolymers vorliegt, das Fasern und Garne bildet, was in der geschmolzenen Masse zu einer Konzentration von PMMA von 1,7 bis 6,8 Gew.-% führt.

**11.** Verfahren gemäß einem der Ansprüche 7 bis 10, bei dem die Masterbatch-Zusammensetzung in der Form von festen Pellets hinzugefügt wird durch ein gravimetrisches System in dem Extrusionsbereich des geschmolzenen Polyesterpolymers, das das Garn und die Fasern bildet.

**12.** Verfahren gemäß einem der Ansprüche 7 bis 10, bei dem die Masterbatch-Zusammensetzung in geschmolzener Form durch einen Quer-Extruder in dem Extrusionsbereich des geschmolzenen Polyesterpolymers hinzugefügt wird, das das Garn und die Fasern bildet.

**13.** Verwendung des Polyestersynthesegarns und der -fasern gemäß einem der Ansprüche 1 bis 6 zum Herstellen von Texturgarn.

**14.** Ein Texturgarn, das aus Polyestersynthesegarn und -fasern gemäß einem der Ansprüche 1 bis 6 hergestellt ist.

**Revendications**

**1.** Fil et fibres synthétiques de polyester, du type fil préorienté, obtenus par un procédé de filage à l'état fondu, le procédé comprenant l'addition d'une composition de mélange maître aux polymères de polyester fondus formant le fil et les fibres durant le procédé d'extrusion, **caractérisés en ce que** la composition de mélange maître comprend :

- 30 % à 99 % en poids de poly(méthacrylate de méthyle) "PMMA" servant de support ; et
- 1% à 70 % en poids d'un pigment choisi parmi le noir de carbone et le dioxyde de titane dispersé dans le support,

dans lesquels le PMMA est présent à raison de jusqu'à 10 % en poids des polymères de polyester fondus formant le fil et les fibres.

**2.** Fil et fibres synthétiques de polyester selon la revendication 1, dans lesquels la composition de mélange maître comprend 30 à 90 % en poids de PMMA et 10 à 70 % en poids du pigment choisi parmi le noir de carbone et le dioxyde de titane.

**3.** Fil et fibres synthétiques de polyester selon l'une quelconque des revendications précédentes, dans lesquels la composition de mélange maître comprend entre 60 et 80 % de PMMA et entre 20 et 40 % en poids de noir de carbone, la composition de mélange maître étant présente à raison de 2 % à 8 % en poids de la masse fondue des polymères de polyester formant le fil et les fibres, avec pour résultat une concentration de PMMA dans la masse fondue de 1,4 % à 5,6 % en poids.

**4.** Fil et fibres synthétiques de polyester selon la revendication 3, dans lesquels le fil de polyester préorienté POY de 290 dtex a un indice d'orientation compris entre 11,7 (CN/tex) et 8,1 (CN/tex) à une vitesse de filage de 2000 à 4500 m/min, et un allongement à la rupture compris entre 152 % et 186 %, et dans lequel l'indice d'orientation est la valeur de charge ou de force provoquant un allongement de 100 % d'un fil préorienté dans la courbe de charge-allongement dudit fil préorienté.

**5.** Fil et fibres synthétiques de polyester selon l'une quelconque des revendications 1 et 2, dans lesquels la composition de mélange maître comprend entre 50 et 95 % de PMMA et entre 5 et 50 % en poids de dioxyde de titane, la composition de mélange maître étant présente à raison de 2 à 8 % en poids de la masse fondue des polymères de polyester formant le fil et les fibres, avec pour résultat une concentration de PMMA dans la masse fondue de 1,7 % à 6,8 % en poids.

**6.** Fil et fibres synthétiques de polyester selon la revendication 5, dans lesquels le fil préorienté a un indice d'orientation compris entre 12,1 (CN/tex) et 7,9 (CN/tex) à une vitesse de filage de 2000 à 4000 m/min, et un allongement à la rupture compris entre 152 % et 185 %, et dans lequel l'indice d'orientation est la valeur de charge ou de force provoquant un allongement de 100 % d'un fil préorienté dans la courbe de charge-allongement dudit fil préorienté.

**7.** Procédé de fabrication de fil et fibres synthétiques de polyester, du type fil préorienté, selon l'une quelconque des revendications précédentes, par un procédé de filage à l'état fondu, le procédé comprenant l'addition d'une composition de mélange maître aux polymères de polyester fondus formant le fil et les fibres durant le procédé d'extrusion, **caractérisé en ce que** la composition de mélange maître, comprenant 30 % à 99 % en poids de poly(méthacrylate de méthyle) "PMMA" servant de support et 1 % à 70 % en poids d'un pigment choisi parmi le noir de carbone et le dioxyde de titane dispersé dans le support, est ajoutée dans les polymères de polyester fondu formant le fil et les fibres lors de sa phase d'extrusion ou éventuellement lors d'une phase antérieure avant le mélange, le PMMA étant présent à raison de jusqu'à 10 % en poids des polymères de polyester fondus formant le fil et les fibres.

**8.** Procédé selon la revendication 7, dans lequel la composition de mélange maître comprend 30 à 90 % en poids de PMMA et 10 à 70 % en poids du pigment choisi parmi le noir de carbone et le dioxyde de titane.

**9.** Procédé selon l'une quelconque des revendications 7 et 8, dans lequel la composition de mélange maître comprend entre 60 et 80 % de PMMA et entre 20 et 40 % en poids de noir de carbone, la composition de mélange maître étant présente à raison de 2 % à 8 % en poids de la masse fondue du polymère de polyester formant le fil et les filaments, avec pour résultat une concentration de PMMA dans la masse fondue de 1,4 % à 5,6 % en poids.

**10.** Procédé selon l'une quelconque des revendications 7 et 8, dans lequel la composition de mélange maître comprenant 50 à 95 % de PMMA et 5 à 50 % en poids de dioxyde de titane est ajoutée dans les polymères de polyester fondus formant le fil et les fibres, la composition de mélange maître étant présente à raison de 2 % à 8 % en poids de la masse fondue du polymère de polyester formant le fil et les filaments, avec pour résultat une concentration de PMMA dans la masse fondue de 1,7 % à 6,8 % en poids.

**11.** Procédé selon l'une quelconque des revendications 7 à 10, dans lequel la composition de mélange maître est ajoutée sous la forme de pastilles solides par un système gravimétrique dans la zone d'extrusion du polymère de polyester fondu formant le fil et les fibres.

**12.** Procédé selon l'une quelconque des revendications 7 à 10, dans lequel la composition de mélange maître est ajoutée sous forme fondue au moyen d'une extrudeuse latérale dans la zone d'extrusion du polymère de polyester fondu formant le fil et les fibres.

**13.** Utilisation du fil et des fibres synthétiques de polyester tels que définis dans l'une quelconque des revendications 1 à 6, pour la fabrication d'un fil texturé.

**14.** Fil texturé préparé à partir de fil et fibres synthétiques de polyester tels que définis dans l'une quelconque des revendications 1 à 6.

Fig. 1

Fig. 2

Fig. 3

Fig. 4

% PMMA

Orientation Index

(cN/tex)

3000 m/min

3500 m/min

Fig. 5

Fig. 6

Fig. 7

Fig. 8

Fig. 9

Fig. 10

% Másterbatch

Fig. 11

Fig. 12

**EP 2 826 808 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2210929
- US 2004076823 A
- JP 11350277 B